# EUROPÄISCHE PATENTSCHRIFT

(11) **EP 0 436 863 B1**
(45) Veröffentlichungstag und Bekanntmachung des Hinweises auf die Patenterteilung: **16.06.1993**
(21) Anmeldenummer: 90124059.8
(22) Anmeldetag: 13.12.1990
(51) Int. Cl.: C09K 11/01

(54) **Verfahren zum Rückgewinnen von Leuchtstoff für Bildröhren**
Process of phosphor recovery for image tubes
Procédé de récupération de matériau luminescent pour tubes à image

(30) Priorität: 12.01.1990 DE 4000755
(43) Veröffentlichungstag der Anmeldung: 17.07.1991
(73) Patentinhaber: Nokia (Deutschland) GmbH, 75175 Pforzheim (DE)
(72) Erfinder: Gröner, Peter, W-7306 Denkendorf (DE)

(56) Entgegenhaltungen:
- DE-A- 2 013 624

## Beschreibung

### TECHNISCHES GEBIET

Die Erfindung betrifft ein Verfahren zum Rückgewinnen von Leuchtstoff aus Leuchtstoffschlamm, insbesondere von Leuchtstoff, der bei Elektronenstrahlanregung in einer Bildröhre grün emittiert.

### STAND DER TECHNIK

Leuchtstoffsuspensionen werden zum Beschirmen von Frontglasscheiben für Bildröhren mit verschiedenen Zusatzstoffen versehen, insbesondere mit Natriumdichromat, mit PVA und mit Acrylat. Beim Beschirmvorgang wird überschüssige Suspension von jeder Frontglasscheibe abgeschleudert. Die abgeschleuderte Suspension gelangt in den sogenannten Leuchtstoffschlamm, ebenso wie Suspension, die nach dem Belichten der Beschirmung aus unbelichteten Stellen ausgewaschen wird. Herkömmlicherweise wird der Leuchtstoffschlamm gewaschen und dann gesammelt, bis eine vorgegebene Chargengröße erreicht ist. Der gesammelte Leuchtstoff wird bei etwa 200 °C für eine Stunde getrocknet und dann für eine Stunde bei etwa 400 - 450 °C ausgeheizt. Anschließend erfolgt ein Sieben mit relativ grober Maschenweite, nämlich mit etwa 60 - 70 µm und dann ein Vermahlen in einer Kugelmühle zusammen mit Wasser und PVA. Dann schließen sich weitere übliche Schritte an, insbesondere ein Vorchromiervorgang in einem Lagertank.

Dieses herkömmliche Verfahren ist zeit- und energieaufwendig und führt aufgrund des Mahlprozesses zu einer Verringerung der Leuchtstärke des wiedergewonnenen Leuchtstoffs im Vergleich zur Leuchtstärke jungfräulichen Leuchtstoffs.

Es bestand demgemäß das Problem, ein einfaches Verfahren zum Rückgewinnen von Leuchtstoff für Bildröhren aus Leuchtstoffschlamm anzugeben, das rückgewonenen Leuchtstoff hoher Qualität liefert.

### DARSTELLUNG DER ERFINDUNG

Das erfindungsgemäße Verfahren zum Rückgewinnen von Leuchtstoff für Bildröhren aus Leuchtstoffschlamm zeichnet sich durch folgende Verfahrensschritte aus:
- Erhitzen des Leuchtstoffschlamms auf mindestens etwa 92 °C,
- Waschen der Leuchtstoffsuspension,
- und Naßsieben der Leuchtstoffsuspension.

Dieses Verfahren weist keinen Trocken- und Ausheizeffekt mehr auf. Dies führt nicht nur zu Energieersparnis, sondern auch dazu, daß kontinuierlich oder quasikontinuierlich, mit kleinen Chargen gearbeitet werden kann. Beim herkömmlichen Ausheizen war es dagegen von Vorteil, größere Chargen zu sammeln, um nicht viele Aufheiz- und Abkühlvorgänge ausführen zu müssen. Durch die ausschließliche Naßbehandlung wird verhindert, daß Leuchtstoffteilchen zusammenbacken, die dann wieder durch Mahlen getrennt werden müßten. Ein Mahlprozeß kann also entfallen, wodurch die Leuchtstärke jungfräulichen Leuchtstoffs erhalten bleibt. Der Effekt des Nichtzusammenbackens von Leuchtstoffteilchen wird stark dadurch begünstigt, daß gleich zu Anfang des Rückgewinnungsprozesses ein Erhitzen des Leuchtstoffschlamms auf mindestens etwa 92 °C erfolgt, vorzugsweise durch das Einleiten von Dampf in den Leuchtstoffschlamm. Dabei werden organische Substanzen, die auf der Oberfläche der Teilchen haften, abgelöst. Organische Substanzen auf Leuchtstoffteilchen führen aufgrund verschiedener Effekte zu einer starken Klumpenbildungstendenz.

Wie bereits erwähnt, ist das Erhitzen mit Hilfe von Dampf von besonderem Vorteil. Hierbei strömt der heiße Dampf an den Leuchtstoffteilchen vorbei, was besonders gut dazu beiträgt, daß organische Bestandteile in Lösung gehen. Von Vorteil ist es, den Dampf möglichst fein verteilt zuzuführen, um eine große Reaktionsoberfläche zwischen dem Dampf und den Leuchtstoffteilchen zu schaffen. Weiterhin ist es von Vorteil, wenn der Dampf nicht wesentlich heißer als 100 °C ist, da sich dann unter Einhalten einer bestimmten Energiemenge eine längere Reaktionsdauer ergibt als beim Zuführen von Dampf höherer Temperatur. Die längere Reaktionszeit führt zu besonders intensiver Behandlung aller Leuchtstoffteilchen durch den Dampf.

Damit der Verfahrensschritt des Naßsiebens schnell und effektiv abläuft, ist es von Vorteil, ein zweistufiges Vibrationssieb zu verwenden, mit einem ersten Sieb von z. B. 100 µm Maschenweite und einem zweiten Sieb von vorzugsweise nur etwa 30 - 40 µm Maschenweite. Metallischer Feinabrieb wird magnetisch entfernt.

### FIGUREN

- Fig. 1: Flußdiagramm zum Erläutern eines Verfahrens zum Rückgewinnen von Leuchtstoff für Bildröhren aus Leuchtstoffschlamm;
- Fig. 2: schematische Darstellung eines Reaktionsgefäßes, durch dessen Boden Dampf geleitet wird;
- Fig. 3: schematische Darstellung eines Vibrationssiebs.

### WEGE ZUM AUSFÜHREN DER ERFINDUNG

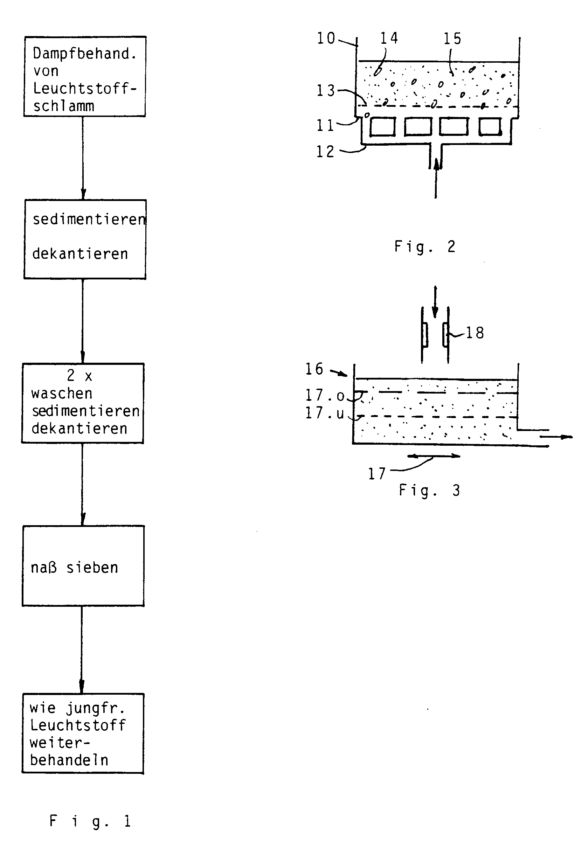

Beim Verfahren gemäß dem Ausführungsbeispiel wird Leuchtstoffschlamm in Behältern von jeweils 30 l Fassungsvermögen gesammelt. Im Schlamm sind etwa 0,2 Gew.% Leuchtstoff enthalten. In einem ersten Verfahrensschritt wird dem Leuchtstoffschlamm Dampf von 110 °C mit einem Druck von 200 kPa zugeführt. Dies erfolgt in einem Reaktionsgefäß 10, wie es in Fig. 2 dargestellt ist. Im Boden 11 des Reaktionsgefäßes sind Löcher vorhanden, denen über ein Dampfverteilungssystem 12 Dampf zugeführt wird. Einige Zentimeter über dem Boden 11 befindet sich eine Lochplatte 13 mit zahlreichen feinen Löchern. Diese Anordnung führt dazu, daß fein verteilte Dampfblasen 14 durch den Leuchtstoffschlamm 15 perlen. Das Erhitzen erfolgt für etwa 20 - 30 Minuten, wobei eine Temperatur von etwa 92 - 96 °C erreicht wird. Die Temperatur des bearbeiteten Leuchtstoffschlamms 15 soll mindestens etwa 92 °C erreichen, um zufriedenstellende Behandlungsergebnisse zu erzielen. Bei dieser Dampfbehandlung werden organische Stoffe, nämlich PVA und insbesondere Acrylat von der Oberfläche der Leuchtstoffteilchen abgelöst. Dieses Ablösen läßt sich auch dann erreichen, wenn der Leuchtstoffschlamm über erhitzte Wandungen des Reaktionsgefäßes 10 erwärmt wird, jedoch sind die Behandlungsergebnisse erheblich besser, wenn Dampf verwendet wird.

Nach der Dampfbehandlung sedimentiert der Leuchtstoff, und die überstehende wässrige Lösung von insbesondere organischen Stoffen und Zinkchromat wird dekantiert. Es erfolgt dann zweimaliges Waschen mit jeweils etwa 30 l Wasser mit anschließendem Sedimentieren und Dekantieren. Jeder der insgesamt genannten drei Sedimentier- und Dekantiervorgänge benötigt etwa 20 - 30 Minuten. Die derart aufbereitete Leuchtstoffsuspension muß nur noch von gröberen Partikeln befreit werden, um dann wie jungfräulicher Leuchtstoff weiterverarbeitet werden zu können. Das Befreien von größeren Partikeln erfolgt durch Naßsieben. Beim Ausführungsbeispiel wurde ein zweistufiges Vibrationssieb 16 verwendet, wie es durch Fig. 3 veranschaulicht ist. Durch einen Doppelpfeil 17 ist die Vibrationsbewegung des Siebes angedeutet. Es verfügt über ein oberes Sieb 17.o mit einer Maschenweite von 100 µm und ein unteres Sieb 17.u von 40 µm Maschenweite. Das Sieben einer Charge der genannten Größe benötigt ebenfalls etwa 20 - 30 Minuten, wie jeder der anderen Verfahrensschritte.

Die Leuchtstoffsuspension wird dem Naßsieb durch einen Magnetabscheider 18 zugeführt. Wie erwähnt, kann der naßgesiebte Leuchtstoff wie jungfräulicher Leuchtstoff weiterverarbeitet werden.

Mit dem Verfahrensablauf gemäß dem Ausführungsbeispiel läßt sich eine Suspension feinster Leuchtstoffteilchen mit hoher Ausbeute herstellen. Dies insbesondere, weil die Wärmebehandlung im ersten Verfahrensschritt, insbesondere das Behandeln mit Dampf dazu führt, die Klumpenbildungsneigung herabzusetzen, die die Leuchtstoffteilchen aufweisen, die im Schlamm vorliegen.

## Patentansprüche

1. Verfahren zum Rückgewinnen von Leuchtstoff für Bildröhren aus Leuchtstoffschlamm,
**gekennzeichnet durch** folgende Verfahrensschritte:
- Erhitzen des Leuchtstoffschlamms auf mindestens 92 °C,
- Waschen der Leuchtstoffsuspension,
- und Naßsieben der Leuchtstoffsuspension.

2. Verfahren nach Anspruch 1, **dadurch gekennzeichnet,** daß das Erhitzen mit Hilfe von Dampf erfolgt.

3. Verfahren nach Anspruch 2, **dadurch gekennzeichnet,** daß der Dampf möglichst fein verteilt von unten in den Leuchtstoffschlamm eingeblasen wird.

4. Verfahren nach Anspruch 2, **dadurch gekennzeichnet,** daß der Dampf eine Temperatur von etwa 110 - 120 °C aufweist.

5. Verfahren nach Anspruch 1, **dadurch gekennzeichnet,** daß das Naßsieben in einem zweistufigen Vibrationssieb erfolgt.

6. Verfahren nach Anspruch 1, **dadurch gekennzeichnet,** daß die Leuchtstoffsuspension durch einen Magnetabscheider geführt wird.

## Claims

1. Method for recovering phosphor for picture tubes from phosphor sludge, characterized by the following process steps:
- Heating the phosphor sludge to at least approximately 92°C;
- Washing the phosphor suspension; and
- Wet sieving the phosphor suspension.

2. Method according to Claim 1, characterized in that heating occurs by means of steam.

3. Method according to Claim 2, characterized in that the steam is blown into the phosphor from below in as finely divided a manner as possible.

4. Method according to Claim 2, characterized in that the steam has a temperature of approximately 110 - 120°C.

5. Method according to Claim 1, characterized in that wet sieving occurs in a two-stage vibratory sieve.

6. Method according to Claim 1, characterized in that the phosphor suspension is passed through a magnetic separator.

## Revendications

1. Procédé pour la récupération de substance luminescente pour tubes images à partir de boue de substance luminescente,
caractérisé par les phases d'opération suivantes:
- échauffement de la boue de substance luminescente à au moins 92 °C,
- lavage de la suspension de substance luminescente,
- et refiltrage de la suspension de substance luminescente.

2. Procédé selon la revendication 1, caractérisé en ce que l'échauffement se fait à l'aide de vapeur.

3. Procédé selon la revendication 2, caractérisé en ce que la vapeur est soufflée finement divisée du bas dans la boue de substance luminescente.

4. Procédé selon la revendication 2, caractérisé en ce que la vapeur a une température d'env. 110 - 120 °C.

5. Procédé selon la revendication 1, caractérisé en ce que le refiltrage se fait dans un crible vibrateur à deux étages.

6. Procédé selon la revendication 1, caractérisé en ce que la suspension de substance luminescente est passée à travers un séparateur magnétique.
